# EUROPEAN PATENT APPLICATION

(11) **EP 1 148 263 A1**
(43) Date of publication of application: **24.10.2001**
(21) Application number: 01108588.3
(22) Date of filing: 05.04.2001
(51) Int. Cl.: F16D 27/115, F16D 47/04

(54) **Ball ramp clutch with frictional damping**

(30) Priority: 17.04.2000 US 550563
(71) Applicant: EATON CORPORATION, Cleveland, Ohio 44114-2584 (US)
(72) Inventor: Organek, Gregory Joseph, Whitefish Bay, Wisconsin 53217 (US); Preston, David Michael, Clarkston, Michigan 48346 (US)
(74) Representative: Patentanwälte Rüger, Barthelt & Abel

(57) **Abstract**

A ball ramp mechanism (36) is used to apply a damping load to a clutch pack (26) to rotationally couple an input shaft (6) to an output shaft (8). The ball ramp mechanism (36) is comprised of a control plate (20) having a control extension (20A) radially extending therefrom and an activation plate (32) having an activation extension (32A) radially extending therefrom and an intermediate plate (34) rotating with the input shaft (6) and disposed between the control extension (20A) and the activation extension (32A) where the control extension (20A) and the activation extension (32A) and the intermediate plate (34) are rotationally frictionally coupled upon application of an electromagnetic field therein generated by stationing coil (48) acting through a rotating coil pole (44).

The activation plate (32) is mounted to the output shaft (8) through a first one-way clutch (24) and the coil pole (44) is mounted to the output shaft (8) through a second one-way clutch (46). The first one-way clutch (24) is oriented opposite to the second one-way clutch (46).

## Description

### Field of the Invention

The present invention relates to a vehicle driveline clutch actuator which utilizes a ball ramp mechanism to load a clutch pack and more specifically to a vehicle driveline clutch actuator using ball ramp mechanism having an intermediate plate interposed between a control plate and an activation plate to load a clutch pack.

### Prior Art

Driveline master clutches commonly use a plurality of springs to clamp a friction disc to an engine flywheel. The clamping springs are normally disposed within a pressure plate assembly which is bolted to the flywheel. The friction discs are splined to rotate with a transmission input shaft which when rotated provides motive power to the driveline and wheels. A mechanical linkage operated by a driver is used to control the operation of the master clutch.

Efforts to automate the operation of the master clutch to take the place of the driver are currently underway. It is known to make use of a hydraulic actuator or an electric motor to operate the master clutch release mechanism in response to a control signal generated by a control. microprocessor in response to a multiplicity of sensor outputs which are used to determine the vehicle operating conditions and hence the desired operation of the master clutch.

The use of a ball ramp actuator to operate a driveline master clutch is known in the art. U.S. Pat. Nos. 5,441,137; 5,469,948; 5,505,285; 5,651,437; 5,810,141; 5,910,061; 5,964,330; and RE 36,502 assigned to the same assignee on this application, all of which are hereby expressly incorporated by reference, and disclose methods of using a ball ramp actuator to supply the clamping force on a clutch disc to frictionally rotationally connect the engine flywheel to the transmission input shaft. The ball ramp actuator is activated when a electrical current is supplied to a coil thereby producing an electromagnetic field in a coil pole which applies a retarding force to a rotating armature. The rotating member is commonly an annular control plate which has a plurality of control ramps which vary in depth. An opposed annular activation plate has a like number of opposing variable depth activation ramps where a corresponding number of rolling elements are trapped therebetween. As the retarding force is applied to the control plate, the relative rotation movement of the control plate to the activation plate causes the rolling elements to traverse the control ramps and the activation ramps thereby causing an increase in separation distance between the control and activation plates to provide the clutch disc clamping force.

In the prior art, operation of the master clutch or other driveline coupling system such as a differential or transfer case could be improved by improving the inherent mechanical stability of the ball ramp.

Also shown in the prior art are other types of vehicle driveline devices which make use of a ball ramp mechanism to provide a clamping load to a clutch pack. U.S. Pat No. 5,092,825 discloses a limited slip differential having a clutch pack loaded by a ball ramp actuator. U.S. Pat. No. 5,499,951 discloses a driveline transfer case when the torque split is controlled by a ball ramp actuator. U.S. Pat. No. 5,528,950 discloses a transmission inertia brake where a ball ramp actuator loads a clutch pack to slow a spinning transmission shaft. U. S. Pat. No. 5,819,883 discloses a driveline retarder in which a ball ramp actuator is used to load a clutch pack to rotate a hydraulic pump in response to a signal from a control unit. The disclosures of U.S. Pat. Nos. 5,092,825; 5,499,951; 5,528,950 and 5,819,883 are all hereby incorporated by reference.

### Summary of the Invention

The present invention results in an improvement in the operational characteristics of a ball ramp actuator which can be used in a variety of vehicle driveline applications to supply a clamping load to a frictional clutch pack. The present invention provides a unidirectional apply ball ramp function along with significantly increased frictional damping in the ball ramp mechanism to control and stabilize the ball ramp mechanism and thereby improve the operation of the master clutch or other driveline device.

One-way clutches are used to control the rotational direction of the coil pole and the rotational direction of the activation plate to provide the unidirectional apply function using unilateral grooves in the control plate and activation plate where the clutch clamping load is maintained irregardless of the torque flow in the vehicle driveline. The operating direction of the one-way clutches are oriented in opposite directions.

To improve the operation of the ball ramp mechanism, the stability is improved by significantly increasing the frictional damping using an intermediate plate disposed between the activation plate and the control plate where the intermediate plate rotates with the input shaft and drive hub. The coil assembly generates an electromagnetic force that frictionally rotationally couples the coil pole, the control plate, the intermediate plate and the activation plate together. The one-way clutches are oriented to only allow the coil pole to rotate in an opposite direction from that of the activation plate. The activation plate rotates on a first one-way clutch on the output shaft while the intermediate plate is driven by the drive hub and the coil pole rotates on a second one-way clutch also on the output shaft.

One provision of the present invention is to provide a ball ramp actuator to load a clutch pack.

Another provision of the present invention is to provide a ball ramp actuator to load a clutch pack where the clutch clamp load is maintained irregardless of the direction of driveline torque flow.

Another provision of the present invention is to provide a ball ramp actuator to load a clutch pack where the frictional damping of the ball ramp control system is substantially increased to improve operation.

Still another provision of the present invention is to provide a ball ramp actuator to load a driveline master clutch disc having improved operational characteristics.

### Brief Description Of The Drawings

FIG. 1 is a cross-sectional view of the clutch assembly of the present invention;
FIG. 2 is a sectional view of the ball ramp clutch of the present invention taken along line II-II of Fig 1;
FIG. 3 is an illustrative partial view of the nonactivated ball ramp mechanism of the present invention taken along line III-III of Fig 2; and
FIG. 4 is an illustrative partial view of the activated ball ramp mechanism of the present invention taken along line III-III of Fig 2.

### Detailed Description of the Preferred Embodiment

For the purposes of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

Certain terminology will be used in the following description for convenience in reference only and will not be limiting. The terms "rightward" and "leftward" will refer to directions in the drawings in connection with which the terminology is used. The terms "inwardly" and "outwardly" will refer to directions toward and away from, respectively, the geometric center of the apparatus. The terms "upward" and "downward" will refer to directions as taken in the drawings in connection with which the terminology is used. All foregoing terms mentioned above include the normal derivatives and equivalents thereof.

Although primarily described for use in a vehicle driveline, the present invention can be used to rotationally correct any two rotatable shafts in response to a control signal. Such alternative devices could include differentials, engine retarders transmission brakes, foundation brakes, inertia brakes, transfer cases and other devices.

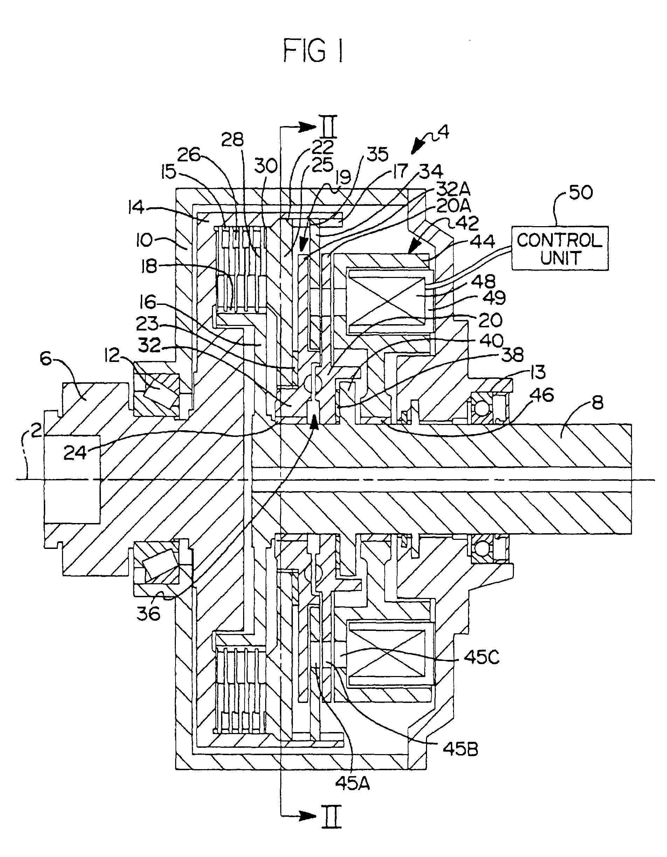

Now referring to Figure 1, a cross-sectional view of the clutch assembly 4 of the present invention is shown. An input shaft 6 is connected to a rotatable power source such as an internal combustion engine (not shown) and the clutch assembly 4 functions to rotationally link the input shaft 6 to output shaft 8 which as an example could be the input shaft to a transmission. The elements of the clutch assembly generally rotate and are symmetrical around an axis of rotation 2. A housing 10 is supported by the input shaft 6 through first bearing 12 and by the output shaft 8 by second bearing 13. The input shaft 6 is attached to a drive hub 14 which has a plurality of splines 15 on an inner surface of drive hub extension 17. The output shaft 8 is attached to an output hub 16 which has a plurality of splines 18 formed on the outside peripheral surface. The connotation of the terms "input shaft" and "output shaft" and the terms "drive hub" and "output hub" are interchangeable depending on the direction of torque flow through the clutch assembly 4.

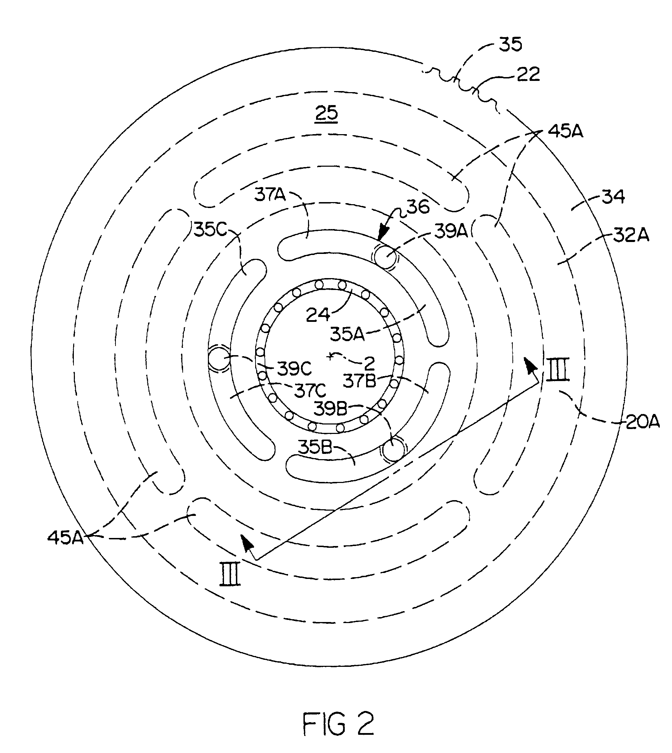

The ball ramp assembly 36 is comprised of a control plate 20, the activation plate 36 and the rolling elements 39A, 39B, 39C (see figure 2) which separate the control plate 20 and the activation plate 32 depending on their relative position in respective ramps 35A, 35B, 35C and 37A, 37B, 37C. As the activation plate 32 moves away from the control plate 20 it acts through thrust bearing 23 to apply a force on the pressure plate 32 so as to compress the clutch pack 26 to provide a frictional rotational link between the drive hub 14 and the output hub 16. The clutch pack 26 is comprised of a plurality of drive plates 30 which are rotatably connected to the drive hub 14 by splines 15 and a plurality of driven plates 28 which are rotably connected to the output hub 16 by splines 18. Again, the connotation of the terms "driven plates" and "drive plates" depends on the direction of the flow of torque through the driveline. If the engine is powering the vehicle, then the connotation of the terminology is traditional whereas when the vehicle is being braked by the engine, then the connotation must be reversed.

An intermediate plate 34 is rotatably connected to the drive hub 14 through splines 35 as is the pressure plate 25. The intermediate plate 34 extends to be positioned between the control plate 20 and the activation plate 32. More specifically, the control plate 20 is axially restrained by a thrust bearing 38 which reacts against a shaft 40 which is attached to the output shaft 8.

A first one-way clutch 24 is used to support the activation plate 25 on the output shaft 8. The first one-way clutch 24 is oriented to lock the rotation of the activation plate 25 when the input shaft 6 is rotating in a direction such as when the engine is powering the vehicle and the driveline torque flows from the input shaft 6 to drive the output shaft 8.

More specifically, the control plate 20 includes a control extension 20A which radially extend and magnetically interacts with both the coil pole 44 and the intermediate plate 34. The activation plate 32 includes an activation extension 32A which radially extend and magnetically and frictionally enters with the intermediate plate 32A. The intermediate plate 34 is disposed between the control extension 20A and the activation extension 32A.

A second one-way clutch 46 is used to support the coil pole 44 on the output shaft 8. The second one-way clutch 46 is oriented opposite to the first one-way clutch 24 to lock the rotation of the control plate 20 when the input shaft 6 is rotating in a direction such as when the engine is braking the vehicle and the torque flow through the driveline is reversed from that described supra.

The control extension 20A, the intermediate plate 34 and the activation extension 32A contact one another directly or a friction material can be attached to either or both of the surfaces of the control extension 20A, the intermediate plate 34 or the activation extension 32A. Slots are formed in the coil pole 44 intermediate plate 34 and the control extension 20A to provide a proper magnetic circuit.

A coil assembly 42 is electrically energized by a control unit 50 to produce an electromagnetic field to activate the ball ramp mechanism 36. The coil assembly 42 is comprised of a coil 48 that is mounted to the housing 10. The coil stator 49 is partially surrounded by a coil pole 44. Both the coil stator 49 and the coil pole 44 are made of a ferro magnetic material to allow conduction of electromagnetic fields therein.

When the coil assembly 42 is energized, the control plate 20 through the control extension 20A and the intermediate plate 34 and the activation plate 32 through the activation extension 32A are electromagnetically drawn together to become frictionally and thereby rotationally linked. Some slippage can occur depending on the axial loading, the coefficient of friction material and the torque transfer. This configuration in combination with the operation of the first and second one-way clutches 24 and 46 results in a ball ramp assembly 19 having a higher level of damping for improved operation.

Now referring to Figure 2 of the drawings, a partial sectional view of the clutch assembly 4 of the present invention taken along line II-II is shown. The pressure plate 25 is shaped to engage the drive hub extension 17 by the splined drive 22. In a like manner, the intermediate plate 34 is shaped to engage the drive hub extension 17 by the splined drive 35. By using splined drive 22 and 35, the pressure plate 25 and the intermediate plate 34 are rotationally coupled to the drive hub 14 while axial movement is allowed as required.

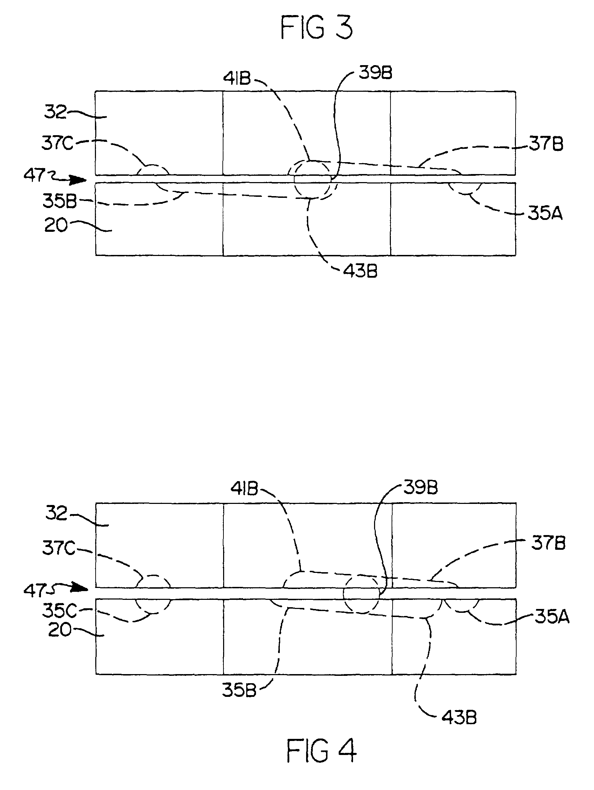

More clearly illustrated are the control ramps 35A, 35B, 35C formed in the control plate 20 and the activation ramps 37A, 37B, 37C formed in the activation plate 32. The control ramps 35A, 35B, 35C at least partially oppose the activation ramps 37A, 37B, 37C and both are of variable depth increasing from one end to the other. Rolling elements 39A, 39B, 39C simultaneously contact and roll along respective opposed control ramps 35A, 35B, 35C and activation ramps 37A, 37B, 37C. The rolling elements 39A, 39B, 39C are shown in a nonactivated position where each contacts a respective control and activation ramp 35A, 35B, 35C; 37A, 37B, 37C at their lowest depth thereby minimizing the separation distance 47 (see Figure 3). As the ball ramp mechanism is activated by electronically energizing the coil 48, assuming there exists slippage in the clutch pack 26, the control plate 20 moves counterclockwise relative to the activation plate 32 thereby causing the rolling elements 39A, 39B, 39C to transverse then three respective pairs of opposed variable depth control ramps 35A, 35B, 35C and activation ramps 37A, 37B, 37C. As the control plate 20 continues to rotate relative to the activation plate 32, the separation distance 47 increases thereby increasing the clamp force on the clutch pack 26.

Now referring to Figures 3 and 4 of the drawings, an illustrative cross-sectional view of the ball ramp mechanism 36 of the present invention taken along line III-III of Figure 2 is shown. Figure 3 shows the ball ramp mechanism 36 in a nonactivational state and Figure 4 shows the ball ramp mechanism 36 in an activated state at about fifty percent travel.

In Figure 3, the rolling element 39B is positioned at the maximum depth of both the control ramp 358 and the opposed activation ramp 37B and the separation distance 47 is at a minimum. Reference point 41 B is on the activation ramp 37B and reference point 43B is on the control ramp 35B for use in comparison to their positions in Figure 4.

In Figure 4, the rolling element 39B has traversed both the control ramp 35B and the activation ramp 37B as the control plate 20 has been rotated relative to the activation plate 32. The separation distance 47 has increased since the rolling element 39B is now contacting a more shallow portion of both the control ramp 35B and the activation ramp 37B. The relative position of reference points 41 B and 43B illustrate the relative rotation.

### Operation:

Consider the situation when the torque flow is from the input shaft 6 to the output shaft 8 where both the input and output shafts 6, 8 are both rotating clockwise as viewed from the input shaft 6 and the coil assembly 42 is energized. This condition is analogous to a vehicle being powered by the engine where the clutch assembly is functioning as a master clutch. The first one-way clutch 24 becomes locked and the second one-way clutch 46 becomes unlocked to allow relative rotation between the control plate 20 and the activation plate 32 in a direction to further expand the ball ramp mechanism 36. The control plate 20 is frictionally connected to the coil pole 44 which is allowed to rotate at or slower relative to the output shaft 8 by the one-way clutch 46 which is unlocked (i.e. the input shaft 6 and output shaft 8 are rotating clockwise while the coil pole 44 is free to rotate relative to the output shaft 8 in a counterclockwise direction). Thus, the coil pole 44 can rotate at or slower than the speed of the output shaft 8.

The intermediate plate 34 is rotating with the input shaft 6 while the activation plate 32 is locked by the first one-way clutch 24 to rotate with the output shaft 8. If there is slippage occurring in the clutch pack 26, then the input shaft 6 will be rotating at a slightly higher speed than the output shaft 8. Thus, the intermediate plate 34 will be rotating faster than the output shaft 8 but the control plate 20 cannot rotate faster than the output shaft 8 because it is magnetically/frictionally coupled to the coil pole 44 which is only allowed to rotated at the speed of the output shaft 8 or slower. The intermediate plate 34 is also frictionally coupled to the activation plate 32 which is allowed to rotate at or faster than the output shaft 8 because the first one-way clutch 24 is locked. Thus, if there is slippage in the clutch pack 26 then the input shaft 6 is rotating faster than the output shaft 8 and the activation plate 32 will rotate faster than the control plate 20 (at least for a short time) which will further activate the ball ramp mechanism 36 and increase the separation distance 47 between the control plate 20 and the activation plate 32. The increased separation will increase the clamp load on the clutch pack 26 by axial movement of the pressure plate 25. This will in turn reduce the amount of slippage in the clutch pack 26 and improve rotational coupling between the input shaft 6 and the output shaft 8.

Now consider the situation when the torque flow is reversed from the preceding example and the example and the output shaft 8 is attempting to rotate faster than the input shaft 6 and the clutch assembly 4 is functioning as a master clutch. This situation is analogous to a vehicle which is under engine braking. Both the input shaft 6 and the out put shaft 8 are still rotating clockwise and the coil assembly 42 is energized. The first one-way clutch 24 becomes unlocked and the second one-way clutch 46 becomes locked to allow relative rotation between the control plate 20 and the activation plate 32 in a direction to farther expand the ball ramp mechanism 36. The control plate 20 is frictionally connected to the coil pole 44 which is rotationally connected to the output shaft 8 by the locked second one-way clutch 46. Thus, the coil pole 44 and the control plate 20 will rotate at least as for as the output shaft 8. The intermediate plate 34 is rotating with the input shaft 6 which is rotating at a slightly slower speed than the output shaft 8 assuming some slippage in the clutch pack 26. Since the activation plate 32 is magnetically attracted toward the intermediate plate 34, it will frictionally be slowed to the speed of the input shaft 6. This is permitted since the first one-way clutch 24 is unlocked which allows this activation plate 32 to rotate at a slower speed than the output shaft 8. In this manner the present invention provides for the rotation of the activation plate 32 relative to the control plate 20 in the same direction as the previous example which results in an increase in the axial separation distance 47 between the control plate 20 and the activation plate 32 and a corresponding increase in the clamping load on the clutch pack 26.

Thus the present invention provides for an increase in clutch pack 26 clamp load when the torque is flowing in either direction through the clutch assembly 4 using a unidirectional ball ramp mechanism 36. The utilization of the first one-way clutch on the activation plate 32 and the second one-way clutch 46 on the coil pole 44 operating in conjunction with the intermediate plate 34 provides the operational feature of continuous loading of the clutch pack 26 in any type of operational mode when the coil 48 is energized.

Although this invention has been described in its preferred form with a certain degree of particularity, it is understood that the present disclosure of the preferred form has been made only by way of example in that numerous changes in the details and construction and combination and arrangement of parts may be resorted to without departing from the spirit and the scope of the invention as now claimed.

## Claims

1. A clutch assembly for rotationally coupling two rotatable shafts comprising:
an input shaft rotating about an axis of rotation;
an output shaft having an axis of rotation;
a ball ramp mechanism for generating a clamping force comprising; an annular control plate having an axis of rotation, said control plate having a plurality of circumferential control ramps formed in a face of said control plate, said control ramps varying in axial depth, an equivalent number of rolling elements one occupying each of said control ramps, an activation plate mounted to said output shaft through a first one-way clutch having an axis of rotation coaxial with said axis of rotation of said control plate, said activation plate having a plurality of activation ramps substantially identical in number, shape and radial position to said control ramps where said activation ramps at least partially oppose said control ramps and where each of said rolling elements is contained between one of said activation ramps and a respective control ramp, said control plate being axially and rotationally moveably disposed relative to said activation plate, said control plate having an annular control extension radially extending therefrom and said activation plate having an annular activation extension radially extending therefrom;
an annular intermediate plate nonrotatably connected to said input shaft and disposed between said control extension and said activation extension;
a coil for creating of an electromagnetic field in a coil pole upon introduction of an electrical current in said coil where said coil pole is mounted to said output shaft through a second one way clutch;
a clutch pack for frictionally rotatably connecting said input shaft to said output shaft upon application of said clamp load generated by said ball ramp mechanism;
where upon introduction of an electrical current in said coil an electromagnetic field is generated to rotationally couple said coil pole to said control extension and said control extension to said intermediate plate and said intermediate plate to said activation extension.

2. A ball ramp mechanism for coupling an input shaft to an output shaft comprising:
an annular control plate having an axis of rotation, said control plate having plurality of circumferential control ramps formed in a face of said control plate, said control ramps varying in axial depth, an equivalent number of rolling elements one occupying each of said control ramps, an activation plate having an axis of rotation coaxial with said axis of rotation of said control plate, said activation plate having a plurality of activation ramps substantially identical in number, shape and radial position to said control ramps where said activation ramps at least partially oppose said control ramps and where each of said rolling elements contained between on of said activation ramps and a respective control ramp, said control plate being axially and rotationally moveably disposed relative to said activation plate, said control plate having an annular control extension axially extending therefrom and said activation plate having an annular activation extension radially extending therefrom.
an annular intermediate plate nonrotatably connected to said input shaft and disposed between said control extension and said activation extension;
a coil for electromagnetically rotatably coupling said control plate to said output shaft;
coupling means for rotatably coupling said input shaft to said output shaft upon axial expansion of said ball ramp mechanism.
